Europäisches Patentamt

European Patent Office

Office européen des brevets

(11) Publication number: **0 228 495**

**A1**

# (12) EUROPEAN PATENT APPLICATION

(21) Application number: **86100228.5**

(22) Date of filing: **09.01.86**

(51) Int. Cl.4: **G02B 6/00** , **B29D 11/00**

(43) Date of publication of application:
**15.07.87 Bulletin 87/29**

(84) Designated Contracting States:
**DE FR GB**

(71) Applicant: **SUMITOMO ELECTRIC INDUSTRIES LIMITED**
**No. 15, Kitahama 5-chome Higashi-ku**
**Osaka-shi Osaka 541(JP)**

(72) Inventor: **Ueba, Yohinobu Osaka Works of Sumitomo**
**Electric Ind.Ltd. 1-3, Shimaya 1-ch.**
**Konohana-ku**
**Osaka-shi Osaka-fu(JP)**
Inventor: **Matsumiya, Norifumi Osaka Works of Sumitomo**
**Electric Ind. Ltd., 1-3, Shimaya 1-ch.**
**Konohana-ku**
**Osaka-shi Osaka-fu(JP)**

(74) Representative: **Hoffmann, Klaus, Dr. rer. nat. et al**
**Hoffmann . Eitle & Partner Patentanwälte**
**Arabellastrasse 4**
**D-8000 München 81(DE)**

(54) Method for producing optical waveguide containing image fiber.

(57) A method for producing an optical waveguide comprising a core made of a transparent polymer and a cladding made of a polymer having a lower refractive index than that of the core and containing an image fiber therein, which comprises polymerizing a monomer for the transparent polymer in an atmosphere not containing oxygen and co-extruding the transparent polymer melt around the image fiber and the cladding material around the transparent polymer, by which an optical waveguide having good light transmission characteristics is produced.

# METHOD FOR PRODUCING OPTICAL WAVEGUIDE CONTAINING IMAGE FIBER

## FIELD OF THE INVENTION

The present invention relates to a method for producing an optical waveguide containing an image fiber. The optical waveguide containing an image fiber is used as an optical sensor for transmitting light and/or images.

## BACKGROUND OF THE INVENTION

Hitherto, for the production of the optical waveguide containing an image fiber, there has been proposed several methods. Among them, the most advantageous methods are a method proposed in Japanese Patent Application No. 162847/1983 which comprises co-extruding a core material and a cladding material with simultaneously supplying a metal wire to a co-extrusion die to form an optical waveguide having the metal wire therein and then withdrawing the wire from the waveguide to form a bore therein, and a method proposed in Japanese Patent Application No. 25866/1984 which comprises co-extruding a core material and a cladding material with simultaneously supplying a hollow fiber made of a polymer or quartz to a co-extrusion die to form an optical waveguide having a bore therein.

However, the waveguide containing the image fiber produced by the above methods do not have satisfactory light transmission characteristics since the core material is contaminated during its synthesis and fabrication of the waveguide and/or deteriorated by oxidization. A pelletizing step of the core material seems to significantly contaminated and deteriorated the core material.

## SUMMARY OF THE INVENTION

One object of the present invention is to provide a method for producing an optical waveguide containing an optical image fiber having good light transmission characteristics.

Another object of the present invention is to provide a method for producing an optical waveguide containing an image fiber by which oxidization and contamination of the core material are prevented.

## BRIEF DESCRIPTION OF THE DRAWINGS

Fig. 1 schematically shows one embodiment of an apparatus for producing an optical waveguide containing an image fiber, and

Fig. 2 is a cross section of one embodiment of an optical waveguide containing an image fiber.

## DETAILED DESCRIPTION OF THE INVENTION

According the present invention, there is provided a method for producing an optical waveguide comprising a core made of a transparent polymer and a cladding made of a polymer having a lower refractive index than that of the core and containing an image fiber therein, which comprises polymerizing a monomer for the transparent polymer in an atmosphere not containing oxygen and co-extruding the transparent polymer melt around the image fiber and the cladding material around the transparent polymer.

The monomer for the transparent polymer of the core may be any one of conventionally used ones such as methacrylate, styrene and its derivatives and their deuterated derivatives. The core material should be highly transparent and flexible. Preferably, the transparent polymer of the core has a glass transition temperature of not higher than 50°C, especially from 10 to 40°C. Preferred transparent polymer is a homo-or co-polymer of alkyl methacrylate. The alkyl group of the methacrylate is preferably a straight $C_3$-$C_8$, especially $C_3$-$C_6$ alkyl group, for example, n-propyl, n-butyl, n-pentyl and n-hexyl. The copolymer may comprise at least two different alkyl methacrylate, or at least one alkyl methacrylate and at least one other copolymerizable monomer (e.g. alkyl acrylate such as methyl acrylate and ethyl acrylate). In the copolymer, the content of alkyl methacrylate is preferably not smaller than 85 % by mole.

The transparent polymer is preferably prepared by bulk polymerization in the absence of oxygen since this polymerization mode does not require any additive which decreases transparency of the polymer (e.g. a dispersion stabilizer) and can be carried out in a sealed reactor. The polymerization is initiated by a conventional polymerization initiator used for initiating polymerization of the above monomer. Specific examples of the initiator are azo compounds such as 2,2'-azobisisobutyronitrile and azo-t-butane, and peroxide compounds such as butylperoxide. A chain transfer agent such as n-butylmercaptan and t-butylmercaptan may be used.

As the cladding material, any one of conventionally used polymer can be used so far as it has a lower refractive index than that of the core polymer. Specific examples of the cladding material are fluororesins (e.g. polyvinylidene fluoride, vinylidene fluoride/tetrafluoroethylene copolymer, homo-or co-polymer of fluorine-containing alkyl methacrylate and a blend thereof), silicone resins, ethylene/vinyl acetate copolymer and the like.

The optical waveguide containing the image fiber is produced by co-extruding the thus prepared core material and the cladding material with simultaneously supplying an image fiber to a co-extrusion die. Preferably, the core material is directly supplied from the reactor to an extruder so as to prevent contact with oxygen.

The image fiber is usually made of quartz, multi-component glass or a polymer, and preferably has the number of picture elements of at least 5,000.

The method for producing the optical waveguide containing the image fiber will now be described by way of example, with reference to the accompanying drawings.

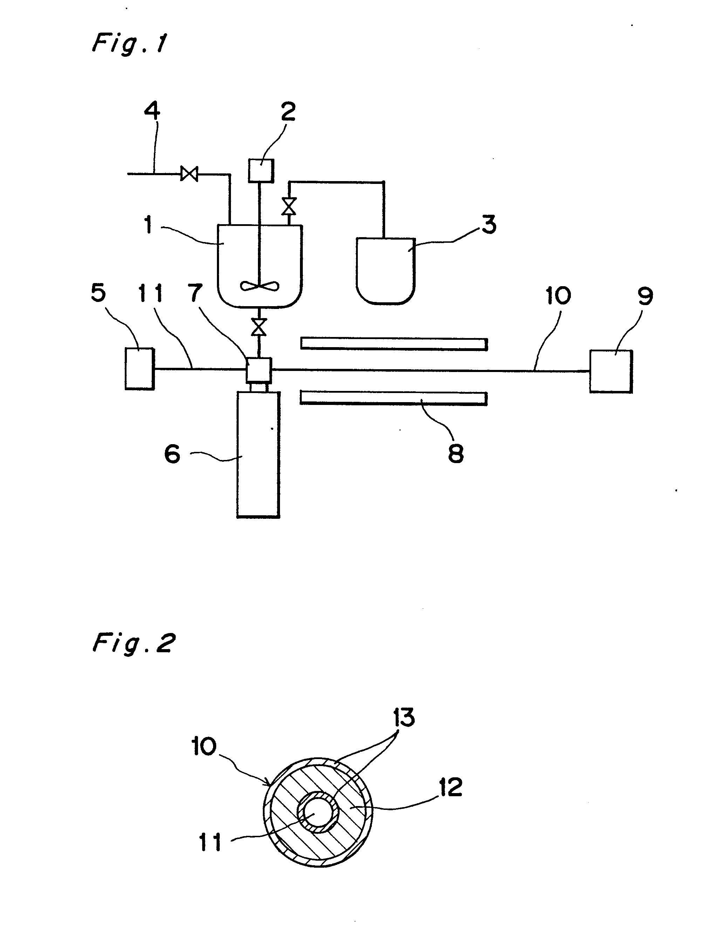

Fig. 1 schematically shows one embodiment of an apparatus for producing the optical waveguide containing the image fiber according to the present invention. The core material is polymerized by the bulk polymerization of the monomer. The monomer is purified by a purifying vessel 3 and transferred to a reactor 1 equipped with a stirrer 3 without contacting with oxygen. To this end, the reactor 1 and the vessel 3 are in a closed system. The monomer can be purified by washing it with a 5 % aqueous solution of sodium hydroxide, drying it with molecular sieve and distilating it. The initiator and the chain transfer agent are also purified and transferred to the reactor without contacting with oxygen. The monomer is polymerized in the reactor. After heating the polymer to a temperature not lower than its melting point, volatile materials are removed under reduced pressure generated by a pressurizing and evacuating line 4. With supplying an image fiber 11 from an image fiber supplier 5 to a co-extrusion head 7, the core material and the cladding material are supplied to the co-extrusion head 7 from the reactor 1 optionally through an extruder and an extruder 6 for the cladding material, respectively and co-extruded. The extruded optical waveguide 10 is passed through a cooling zone 8 and wound by a winder 9.

The produced wave guide containing the image fiber has a cross section for example as shown in Fig. 2, in which the image fiber 11 is surrounded by the optical image guide for illumination consisting of the core 12 and the claddings 13.

Although, in the above description, the number of the image fiber is one, two or more image fibers may be contained in the waveguide of the invention. Further, the hollow member such as a metal tube can be contained in the waveguide together with the image fiber.

The optical waveguide containing the image fiber is used as, for example, a small diameter image fiber scope, an image fiber scope for dental use and an image fiber catheter.

The present invention will be illustrated by following example.

Example

An optical waveguide containing an image fiber was produced by means of an apparatus as shown in Fig. 1.

n-Butyl methacrylate was washed with a 5 % aqueous solution of sodiun hydroxide to reduce hydroquinone content to less than 1 ppm, dried with a molecular sieve and distilled under reduced pressure in a nitrogen atmosphere. The content of hydroquinone in the distilled monomer was less. than the limit of detection and dissolved oxygen was 5 ppm. 200 ml of the purified monomer was charged in the reactor without contacting with oxygen in the closed system and polymerized in the presence of 2,2'-azobisisobutyronitrile (0.02 g) (a polymerization initiator) and n-butyl-mercaptan (400 µl) (a chain transfer agent) at 60°C for 12 hours, at 100°C for 2 hours and then at 130°C for 5 hours. The glass transition temperature of the produced polymer was 21°C.

The polymer was heated to 150°C to melt it and co-extruded with a cladding material - (copolymer of 2,2,3,3-tetrafluoropropyl methacrylate and 2,2,3,3,4,4,5,5-octafluoropentyl methacrylate in a molar ratio of 30:70) around a quartz image fiber having 5,000 picture elements to produce a waveguide containing the image fiber in the core, a cross section of which is shown in Fig. 2. The outer diameter of the waveguide was 0.75 mm, and the wall thickness of each of the claddings was 20 µm. Attenuation of light transmission for He-Ne laser having a wavelength of 330 nm was 0.3 dB/m. In addition, the waveguide had good flexibility.

**Claims**

1. A method for producing an optical waveguide comprising a core made of a transparent polymer and a cladding made of a polymer having a lower refractive index than that of the core and containing an image fiber therein, which comprises polymerizing a monomer for the transparent polymer in an atmosphere not containing oxygen and co-extruding the transparent polymer melt around the image fiber and the cladding material around the transparent polymer.

2. A method according to claim 1, which further comprises melting the polymer and removing volatile materials from the polymer melt before co-extruding it.

3. A method according to claim 1, wherein the transparent polymer has a glass transition temperature of not higher than 50°C.

4. A method according to claim 3, wherein the polymer is a homo-or co-polymer of alkyl methacrylate.

5. A method according to claim 4, wherein alkyl methacrylate is one selected from the group consisting of n-propyl methacrylate, n-butyl methacrylate, n-pentyl methacrylate and n-hexyl methacrylate.

*Fig.1*

*Fig.2*

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| Y | EP-A-0 097 325 (SUMITOMO CHEMICAL CO. LTD.) * page 6, line 8 - page 7, line 8; page 10, line 8 - page 11, line 6; page 12, line 9 - page 13, line 13 * | 1,2,4,5 | G 02 B 6/00 B 29 D 11/00 |
| | --- | | |
| D,Y | PATENT ABSTRACTS OF JAPAN, vol. 9, no. 187 (M-401)[1910], 3rd august 1985; & JP - A - 60 54830 (SUMITOMO DENKI KOGYO K.K.) 29-03-1985 | 1,2,4,5 | |
| | --- | | |
| A | US-A-3 641 332 (REICK et al.) * column 7, lines 40-48; column 8, lines 3-43; column 10, lines 57-75 * | 1,4,5 | |
| | ----- | | |

| | TECHNICAL FIELDS SEARCHED (Int Cl.4) |
|---|---|
| | G 02 B 6/00 B 29 D 11/00 |

The present search report has been drawn up for all claims

| Place of search | Date of completion of the search | Examiner |
|---|---|---|
| BERLIN | 29-09-1986 | KEMSLEY E.E.K. |